# EUROPÄISCHE PATENTSCHRIFT

(11) **EP 2 639 580 B1**
(45) Veröffentlichungstag und Bekanntmachung des Hinweises auf die Patenterteilung: **16.08.2017**
(21) Anmeldenummer: 13172931.1
(22) Anmeldetag: 20.06.2013
(51) Int. Cl.: G01N 27/416

(54) **Funktionsüberwachung eines elektrolytischen Gassensors mit drei Elektroden sowie Gefahrenmelder und Gasmessgerät**
Monitoring the function of an electrolytic gas sensor with three electrodes and a hazard warning device and gas measuring device
Surveillance du fonctionnement d'un capteur de gaz électrolytique doté de trois électrodes ainsi qu'avertisseur de danger et appareil de mesure de gaz

(43) Veröffentlichungstag der Anmeldung: 18.09.2013
(73) Patentinhaber: Siemens Schweiz AG, 8047 Zürich (CH)
(72) Erfinder: Duric, Aleksandar, 6300 Zug (CH)
(74) Vertreter: Maier, Daniel Oliver

(56) Entgegenhaltungen:
- EP-A1- 0 241 601
- EP-A1- 0 417 347
- EP-A1- 2 030 561
- JP-A- H04 190 154
- US-A- 5 202 637
- US-B1- 6 428 684

## Beschreibung

Die vorliegende Erfindung betrifft ein Verfahren sowie eine Vorrichtung zur Funktionsüberwachung eines elektrolytischen, auf ein spezifisches Gas empfindlichen Gassensors mit drei Elektroden, insbesondere mit einer Arbeits-, Referenz- und Gegenelektrode, auf elektrische Fehler wie Kurzschluss, Masseschluss und Unterbrüche der einzelnen Elektroden oder Kombinationen davon. Zur messtechnischen Ermittlung einer Gaskonzentration ist es dabei bekannt, eine zwischen der Referenz- und Arbeitselektrode anliegende Differenzspannung zu verstärken. Darauf basierend wird dann das Potential der Gegenelektrode derart geregelt, dass die Differenzspannung möglichst klein wird. Es stellt sich dabei ein in etwa proportional zu der Gaskonzentration des zu detektierenden Gases in die Gegenelektrode hineinfliessender Messstrom ein.

Aus dem Stand der Technik sind zahlreiche Verfahren bekannt, die eine Überwachung des Gassensors erlauben, indem an die Elektroden des Gassensors z.B. ein Spannungspuls oder eine Pulsreihe angelegt wird und indem nachfolgend verschiedene elektrische Kenngrössen gemessen werden.

In der US 2009/0107838 A1 ist ein elektrochemischer Kohlenstoffmonoxid-Gassensor beschrieben, bei dem ein Spannungspuls an die Gegenelektrode angelegt wird. Anschliessend wird der Strom in die Arbeitselektrode gemessen und analysiert.

Aus der EP 1039293 A1 ist ein Verfahren zur Inspektion eines elektrochemischen Gassensors bekannt, bei dem zwischen Arbeits- und Gegenelektrode eine Spannung mit umgekehrter Polarität angelegt wird, sodass Wasserstoff und Sauerstoff entsteht. Nach Rückkehr in den Messbetrieb dient das zuvor erzeugte Gas als Anregung des Sensors. Somit kann die Funktionsfähigkeit wie auch eine Alterung des Gassensors festgestellt werden. Allerdings ist dieses Verfahren nicht geeignet, wenn die Zutrittsöffnung des Gassensors blockiert ist.

Aus der internationalen Veröffentlichung WO 99/18430 A1 ist ein Überwachungsverfahren für elektrochemische Sensoren bekannt, bei dem eine Wechselspannung mit kleiner Amplitude an die Sensorelektrode angelegt wird. Es wird anschliessend die Impedanz zwischen den einzelnen Elektroden gemessen, um daraus den Zustand des Sensors zu beurteilen.

Die Erfindung betrifft weiterhin einen Gefahrenmelder, der zumindest einen elektrolytischen, jeweils auf ein spezifisches Gas empfindlichen Gassensor und eine derartige Vorrichtung zur Funktionsüberwachung aufweist. Der Gefahrenmelder ist vorzugsweise ein Gasmelder, insbesondere ein CO-Gasmelder bzw. Kohlenstoffmonoxid-Gasmelder. Der Gefahrenmelder weist eine erste Ausgabeeinheit zur Ausgabe einer Warn- oder Alarmmeldung auf, wenn eine ermittelte jeweilige Gaskonzentration einen vorgegebenen Schwellwert oder einen von der jeweiligen Gaskonzentration zeitabhängigen Schwellwert überschreitet. Er weist eine zweite Ausgabeeinheit zur Ausgabe einer Fehlermeldung im Falle einer ermittelten Funktionsunfähigkeit des jeweiligen Gassensors auf.

Derartige typischerweise als Punktmelder ausgebildete Gefahrenmelder werden eingesetzt, um ein unerwünschtes Auftreten einer Gefahrensituation wie beispielsweise ein Austreten und/oder ein Entstehen eines gefährlichen Gases wie Kohlenmonoxid frühzeitig zu erkennen. Sie sind typischerweise in einem gefahrenüberwachten Bereich angebracht, wie z.B. an geeigneten Stellen innerhalb eines Gebäudes. Der Gefahrenmelder kann auch weitere Detektionseinheiten zur Gefahrenmeldung aufweisen, wie z.B. eine nach dem Streulichtverfahren arbeitende optische Detektionseinheit zur Detektion von Rauchpartikeln oder eine Temperaturdetektionseinheit zur Detektion von Hitze im Falle eines Brandes. Ein derartiger Gefahrenmelder wird auch als Multikriterien-Gefahrenmelder bezeichnet. Die jeweiligen Detektionssignale werden zur Reduzierungen von Fehlalarmen sowie zur zuverlässigeren Ausgabe einer detektierten Gefahr miteinander kombiniert.

Ein derartiger Gefahrenmelder kann auch ein Teil eines Gefahrenmeldesystems oder eines umfassenden Gebäudemanagementsystems sein, welches neben einer Zentrale mehrere als Peripheriegeräte ausgebildete Gefahrenmelder aufweist. Die Peripheriegeräte können mit der Zentrale über eine leitungsgebundene oder eine drahtlose Kommunikationsverbindung direkt oder eine indirekt verbunden sein.

Schliesslich betrifft die Erfindung ein Gasmessgerät mit zumindest einem elektrolytischen, jeweils auf ein spezifisches Gas empfindlichen Gassensor und mit einer derartigen Vorrichtung zur Funktionsüberwachung des jeweiligen Gassensors. Das Gasmessgerät weist eine Messausgabeeinheit zur Ausgabe einer jeweiligen Gaskonzentration und eine zweite Ausgabeeinheit zur Ausgabe einer Fehlermeldung im Falle einer ermittelten Funktionsunfähigkeit des jeweiligen Gassensors auf.

Ausgehend von dem eingangs genannten Stand der Technik ist es eine Aufgabe der Erfindung, ein Verfahren zur Funktionsüberwachung eines elektrolytischen Gassensors anzugeben, welches zuverlässig und besonders einfach zu realisieren ist und welches den Sensorbetrieb möglichst wenig beeinträchtigt.

Erfindungsgemäss wird unabhängig von der Ermittlung des Messstroms, welcher die Gaskonzentration repräsentiert, eine an den drei Elektroden anliegende Arbeits-, Gegen- und Referenzspannung erfasst und jeweils auf eine unzulässige Abweichung hin überwacht. In einem unzulässigen Fall wird dann eine zugeordnete Fehlermeldung ausgegeben.

Die Werte der erfassten Arbeits-, Gegen- und Referenzspannung können zudem jeweils mathematisch bewertet werden, wie z.B. gewichtet. Es werden dann die jeweiligen mathematischen Bewertungen auf eine jeweilige unzulässige Abweichung hin überwacht und dann in einem unzulässigen Fall eine zugeordnete Fehlermeldung ausgegeben.

Dadurch ist vorteilhaft eine "Online"-Überwachung des elektrochemischen Gassensors möglich. Auf eine sonstige Unterbrechung des Messbetriebs, in welchem Spannungsimpulse, Impulsfolgen oder kleine Wechselspannungen an die Elektroden zu Testzwecken angelegt werden, kann verzichtet werden. Mit "Online"-Überwachung ist gemeint, dass alle Elektrodenspannungen zumindest in etwa zeitgleich erfasst und ausgewertet werden.

Darüber hinaus kann vorteilhaft auf zusätzlich erforderliche Bauelemente für die Realisierung des Testbetriebs, wie z.B. auf eine Wechselspannungsquelle bei der WO 99/18430 A1, verzichtet werden. Im Vergleich zur US 2009/0107838 A1 muss nach einer Pulsanregung für den Testbetrieb keine anschliessende Erholungszeit eingehalten werden.

Mit unzulässiger Abweichung einer Arbeits-, Gegen- und Referenzspannung ist die Abweichung eines aktuell erfassten Arbeits-, Gegen- und Referenzspannungswertes von einem jeweils vorgegebenen Vergleichsspannungswert gemeint, und zwar nach "oben" und/oder nach "unten", d.h. wenn der jeweilige obere Vergleichsspannungswert überschritten wird und/oder wenn der jeweilige untere Vergleichsspannungswert unterschritten wird.

Die Ausgabe der Fehlermeldung kann auf optischem Wege, wie z.B. mittels eines Lichtsignals, erfolgen. Die Ausgabe kann alternativ oder zusätzlich auf akustischem Wege erfolgen, wie z.B. mittels eines Warntons. Die Fehlermeldung kann alternativ oder zusätzlich an eine übergeordnete Zentrale ausgegeben werden. Die Fehlermeldung kann alternativ oder zusätzlich leitungsgebunden oder drahtlos, wie z.B. mittels Funk, mittels Ultraschall oder mittels Infrarot, ausgegeben werden.

Die (erste) Fehlermeldung kann eine Sammelmeldung sein, welche anzeigt, dass einer der aktuell erfassten Arbeits-, Gegen- und Referenzspannungswerte von einem jeweils vorgegebenen Vergleichsspannungswert in unzulässiger Weise abgewichen ist. Im einfachsten Falle ist diese Fehlermeldung lediglich eine binäre Information. Die Fehlermeldung kann auch kodiert sein, so dass individuell die jeweilige unzulässige Abweichung angezeigt werden kann.

Nach einer bevorzugten Verfahrensvariante wird der Messstrom zuerst in eine dazu proportionale Messspannung umgewandelt, wobei dann diese Messspannung die dazu in etwa proportionale Gaskonzentration repräsentiert. Die dadurch einfacher mögliche messtechnische Erfassung wird mittels eines Transimpedanzwandlers bzw. vorzugsweise mittels eines Transimpedanzverstärkers realisiert.

Einer weiteren Verfahrensvariante zufolge wird eine Warn- oder Alarmmeldung ausgegeben, wenn die die Gaskonzentration repräsentierende Messspannung einen vorgegebenen Schwellwert oder einen von der Gaskonzentration zeitabhängigen Schwellwert über- oder unterschreitet. Derartige Schwellwerte sind z.B. in Europa nach der Norm EN 50291 für die Detektion von Kohlenmonoxid (CO) in Wohnhäusern für Gasmelder vorgegeben. Demnach ist z.B. bei Detektion einer CO-Gaskonzentration von 330 ± 30 ppm innerhalb von 3 Minuten zu alarmieren, während z.B. bei Detektion einer CO-Gaskonzentration von 33 ± 3 ppm frühestens nach 120 Minuten eine Alarmierung erfolgen darf. In ähnlicher Weise regelt die in den USA gültige Norm UL 2034 die Alarmierungsbedingungen für CO-Gasmelder.

Natürlich können für andere zu detektierende Gase, wie z.B. von Kohlenstoffdioxid (CO₂), Ethanol oder Methan, andere Schwellwerte vorgegeben sein. Es kann auch bei Erreichen eines einzigen Schwellwertes sofort eine Alarmierung erfolgen.

Nach einer weiteren Verfahrensvariante wird die Messspannung auf eine unzulässige Spannungsabweichung hin überwacht. Es wird dann in einem unzulässigen Fall eine zugeordnete zweite Fehlermeldung ausgegeben. Dies ist z.B. dann der Fall, wenn die Messspannung einen negativen Spannungswert aufweisen sollte oder wenn die Messspannung einen positiven Spannungswert aufweisen sollte, der einen vorgegebenen minimalen oder maximalen Vergleichswert unter- bzw. überschreitet.

Die zweite Fehlermeldung kann auch ausgegeben werden, wenn sich die Messspannung sprungartig ändert, wobei eine derartige zeitliche Änderung nicht plausibel mit einer physikalischen Änderung der Gaskonzentration ist bzw. nicht der Sensorantwort entspricht. Zum Beispiel darf die Änderung des Ausgangssignals des CO-Sensorverstärkers nicht innerhalb von 1 bis 2 Messzyklen von einem Ruhewert auf den Maximalwert ansteigen. Selbiges trifft auf einen Abfall von einem Maximalwert auf einen Ruhewert zu.

Einer weiteren Verfahrensvariante zufolge wird zumindest eine Kombination aus der Mess-, Arbeits-, Gegen- und Referenzspannung jeweils auf eine weitere unzulässige Abweichung hin überwacht. Es wird dann in einem unzulässigen Fall eine zugeordnete dritte Fehlermeldung ausgegeben. Dies kann die Überwachung einer Differenzspannung, wie z.B. die Differenzspannung zwischen der Referenz- und Gegenelektrode, auf eine unzulässige Abweichung hin sein. Die Kombination kann eine Addition, eine Subtraktion, eine gewichtete Addition oder Subtraktion sein. Es können prinzipiell für eine bewertete Kombination weitere mathematische Funktionen in Betracht gezogen werden, die eine zuverlässige bzw. zuverlässigere Detektion eines Fehlers erlauben.

Die Aufgabe der Erfindung wird weiterhin durch eine zum erfindungsgemässen Verfahren korrespondierende Vorrichtung zur Funktionsüberwachung eines elektrolytischen, auf ein spezifisches Gas empfindlichen Gassensors mit einer Arbeits-, Referenz- und Gegenelektrode gelöst. Die Vorrichtung weist einen Potentiostaten zur Verstärkung einer zwischen der Referenz- und Arbeitselektrode anliegenden Differenzspannung sowie zur Regelung des Potentials der Gegenelektrode auf, so dass die Differenzspannung möglichst klein wird. Die Vorrichtung weist eine elektronische Verarbeitungseinheit zur Erfassung eines in die Gegenelektrode hineinfliessenden, sich in etwa proportional zu einer Gaskonzentration des zu detektierenden Gases einstellenden Messstroms auf. Die elektronische Verarbeitungseinheit ist zusätzlich dazu eingerichtet, unabhängig von der Ermittlung der Gaskonzentration eine jeweils an den drei Elektroden anliegende Arbeits-, Gegen- und Referenzspannung zu erfassen, jeweils auf eine unzulässige Abweichung hin zu überwachen und in einem unzulässigen Fall eine zugeordnete (erste) Fehlermeldung auszugeben.

Die Funktionsweise eines Potentiostaten auf dem Gebiet der elektrolytischen Gassensorik ist aus dem Stand der Technik hinreichend bekannt. Die elektronische Verarbeitungseinheit ist vorzugsweise eine prozessorgestützte elektronische Verarbeitungseinheit, wie z.B. ein Mikrocontroller. Alternativ kann die elektronische Verarbeitungseinheit auch "analog" realisiert sein, wie z.B. durch mehrere Fensterkomparatoren für die Detektion der jeweiligen unzulässigen Abweichung und ggf. durch ein oder mehrere nachgeschaltete Logikgatter für die Ausgabe eines digitalen Signals für die Fehlermeldung.

Nach einer bevorzugten Ausführungsform weist die Vorrichtung einen Transimpedanzverstärker zur Umwandlung des Messstroms in eine dazu proportionale Messspannung sowie die elektronische Verarbeitungseinheit zur Erfassung der dann die Gaskonzentration repräsentierenden Messspannung auf. Durch die Verstärkung und Impedanzwandlung vereinfacht sich die nachfolgende spannungsbasierte Messwerterfassung erheblich.

Einer weiteren Ausführungsform zufolge ist die elektronische Verarbeitungseinheit dazu eingerichtet, die Messspannung auf eine unzulässige Spannungsabweichung hin zu überwachen und in einem unzulässigen Fall eine zugeordnete zweite Fehlermeldung auszugeben.

Vorzugsweise weisen die Messspannung sowie die Arbeits-, Gegen- und Referenzspannung ein gemeinsames Bezugspotential auf. Dieses Bezugspotential ist typischerweise die Masse.

Nach einer weiteren vorteilhaften Ausführungsform weist die Verarbeitungseinheit einen A/D-Umsetzer zur Umsetzung der Messspannung sowie der Arbeits-, Gegen- und Referenzspannung in entsprechende Digitalwerte auf. Alternativ kann die Verarbeitungseinheit auch mit einem A/D-Umsetzer datentechnisch verbunden sein. Der A/D-Umsetzer ist vorzugsweise mehrkanalig ausgeführt, wie z.B. vier- oder achtkanalig, so dass die zu erfassende Messspannung und die Elektrodenspannungen parallel, d.h. gleichzeitig, erfasst werden können. Die Verarbeitungseinheit ist dazu eingerichtet, die Digitalwerte jeweils auf einen der unzulässigen Abweichung entsprechenden Digitalwert hin zu überwachen und in einem unzulässigen Fall die jeweilige zugeordnete Fehlermeldung auszugeben.

Vorzugsweise ist die elektronische Verarbeitungseinheit ein Mikrocontroller. Derartige Bauelemente weisen typischerweise bereits einen mehrkanaligen A/D-Umsetzer sowie weitere analoge und digitale Ein- und Ausgänge auf. Die Digitalwerte, welche den jeweiligen unzulässigen Abweichungen entsprechen, sind vorzugsweise als Datenwerte in einem nichtflüchtigen Datenspeicher des Mikrocontrollers abgelegt. Der Vergleich der umgesetzten Digitalwerte, der digitale Vergleich dieser auf eine unzulässige Abweichung hin sowie die Ausgabe der zweiten Fehlermeldung erfolgt mit programmtechnischen Mitteln, d.h. mittels eines auf dem Mikrocontroller ausgeführten geeigneten Computerprogramms.

Einer weiteren Ausführungsform zufolge ist die Verarbeitungseinheit dazu eingerichtet, zumindest eine Kombination aus je zwei der Mess-, Arbeits-, Gegen- und Referenzspannung entsprechenden Digitalwerten jeweils auf eine weitere unzulässige Abweichung hin zu überwachen und in einem unzulässigen Fall eine zugeordnete dritte Fehlermeldung auszugeben.

Nach einer bevorzugten Ausführungsform sind die Messspannung sowie die Arbeits-, Gegen- und Referenzspannung mittels des A/D-Umsetzers zumindest in etwa zeitgleich mit einer Abtastrate in einem Bereich von 0.25 bis 4 Hertz in die entsprechenden Digitalwerte umsetzbar. Da die digitale Umsetzung der erfassten Eingangsspannungen an dem A/D-Umsetzer sowie der rechnerische Vergleich und ggf. die Generierung einer Fehlermeldung typischerweise nur wenige Millisekunden beträgt, benötigt der Mikrocontroller nur für diese kurze zyklischen Phasen eine signifikante elektrische Leistung, während er in den überwiegenden Pausenphasen nur eine geringe vernachlässigbaren Ruheleistung benötigt. Dadurch ist ein batteriegestützter Betrieb eines Gefahrenmelders über mehrere Jahre hinweg vorteilhaft möglich.

Einer weiteren, besonders vorteilhaften Ausführungsform weist die Vorrichtung ein dem A/D-Umsetzer vorgeschaltetes Tiefpass-Rauschfilter zur Filterung der Messspannung mit einer Eckfrequenz von weniger als 10 Hertz, insbesondere von weniger als 1 Hertz auf Hertz, auf.

Durch die Glättung der Messspannung ist eine vergleichsweise langsame leistungssparende A/D-Umsetzung möglich. Dagegen benötigt eine vergleichsweise hochfrequente A/D-Umsetzung im Bereich von mehreren Kilohertz mit nachgeschaltem Digitalfilter ein Vielfaches der elektrischen Leistung, um den hohen Rauschanteil in der Messspannung wieder zu eliminieren.

Die Aufgabe der Erfindung wird weiterhin durch einen Gefahrenmelder mit zumindest einem elektrolytischen, jeweils auf ein spezifisches Gas empfindlichen Gassensor gelöst. Der Gefahrenmelder weist dabei eine erfindungsgemässe Vorrichtung zur Funktionsüberwachung des jeweiligen Gassensors auf. Der Gefahrenmelder weist weiterhin eine erste Ausgabeeinheit zur Ausgabe einer Warn- oder Alarmmeldung auf, wenn eine jeweilige ermittelte Gaskonzentration einen vorgegebenen Schwellwert oder einen von der jeweiligen Gaskonzentration zeitabhängigen Schwellwert über- oder unterschreitet. Er weist zudem eine zweite Ausgabeeinheit zur Ausgabe einer Fehlermeldung im Falle einer ermittelten Funktionsunfähigkeit des jeweiligen Gassensors auf.

Die Ausgabe der Fehlermeldung kann auf optischem Wege, wie z.B. mittels einer blinkenden LED des Gefahrenmelders, erfolgen. Die Ausgabe kann alternativ oder zusätzlich auf akustischem Wege erfolgen, wie z.B. mittels eines Lautsprechers oder eines Buzzers des Gefahrenmelders. Die Fehlermeldung kann alternativ oder zusätzlich über eine Kommunikationsschnittstelle des Gefahrenmelders an eine übergeordnete Zentrale erfolgen. Die Kommunikationsschnittstelle kann zur drahtgebunden Ausgabe der Fehlermeldung eingerichtet sein, wie z.B. an einen angeschlossenen Melderbus. Alternativ oder zusätzlich kann die Kommunikationsschnittstelle zur drahtlosen Ausgabe der Fehlermeldung eingerichtet sein. In diesem Fall kann die Kommunikationsschnittstelle eine Funkschnittstelle, eine Ultraschallschnittstelle oder eine Infrarot-Schnittstelle sein. Die beiden Ausgabeeinheiten können selbstverständlich auch in einer gemeinsamen Ausgabeeinheit zusammengefasst sein.

Die Aufgabe der Erfindung wird weiterhin durch ein Gasmessgerät gelöst, welches zumindest einen elektrolytischen, jeweils auf ein spezifisches Gas empfindlichen Gassensor und eine erfindungsgemässe Vorrichtung zur Funktionsüberwachung des jeweiligen Gassensors aufweist. Das Gasmessgerät weist eine Messausgabeeinheit zur Ausgabe einer jeweiligen Gaskonzentration und eine zweite Ausgabeeinheit zur Ausgabe einer Fehlermeldung im Falle einer ermittelten Funktionsunfähigkeit des jeweiligen Gassensors auf.

Der Konzentrationswert kann als analoges Signal, wie z.B. in Form eines analogen Strom- oder Spannungssignals, oder als digitales Signal ausgegeben werden, wie z.B. digital kodiert oder pulsweitenmoduliert. Im einfachsten Fall ist der Konzentrationswert ein Prozentwert, ein Promillewert oder ein Zahlenwert in ppm (für parts per million). Der Konzentrationswert kann für jedes zu detektierende Gas zugeordnet ausgegeben werden. Die Ausgabe des Konzentrationswerts kann auf einer Anzeigeeinheit, wie z.B. auf einem LCD, des Gasmessgeräts als Zahlenwert ausgegeben werden. Er kann alternativ oder zusätzlich über eine Kommunikationsschnittstelle an eine (zentrale) Messstation ausgegeben werden, wie z.B. über ein Datenkabel oder drahtlos, wie z.B. über Funk oder Infrarot.

Die Ausgabe der Fehlermeldung kann wie zuvor bei dem Gefahrenmelder beschrieben, erfolgen. Alternativ oder zusätzlich kann die Fehlermeldung auf der Anzeigeeinheit des Gasmessgerätes ausgegeben werden. Die beiden Ausgabeeinheiten können wiederum in einer gemeinsamen Ausgabeeinheit zusammengefasst sein.

Die Erfindung sowie vorteilhafte Ausführungen der vorliegenden Erfindung sind am Beispiel der nachfolgenden Figuren ersichtlich. Dabei zeigen
- FIG 1: ein Beispiel für eine Vorrichtung zur Funktionsüberwachung eines elektrolytischen Gassensors mit drei Elektroden gemäss der Erfindung,
- FIG 2: eine Ausführungsform der Vorrichtung nach FIG 1 gemäss der Erfindung,
- FIG 3: einen beispielhaften Gefahrenmelder mit zwei Gassensoren, einem optischen Detektor, einem Temperatursensor und je einer Vorrichtung zur Funktionsüberwachung der Gassensoren gemäss der Erfindung,
- FIG 4: ein beispielhaftes Gasmessgerät mit drei Gassensoren und mit je einer Vorrichtung zur Funktionsüberwachung der Gassensoren gemäss der Erfindung, und
- FIG 5 - FIG 7: jeweils einen Funktionsausfall eines elektrolytischen Gassensors und der Detektion durch das erfindungsgemässe Verfahren.

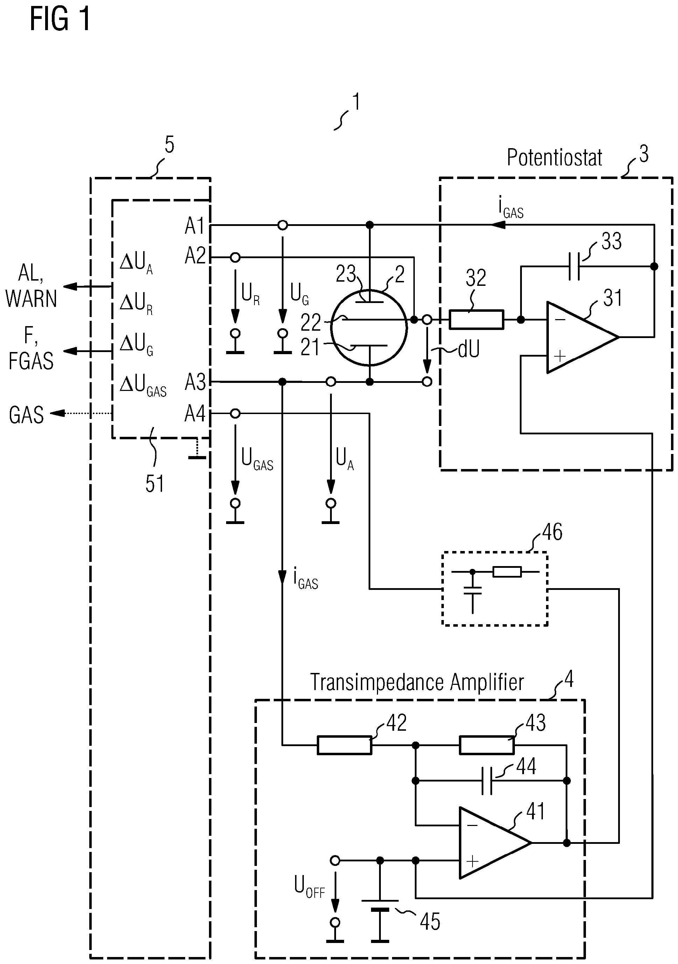

FIG 1 zeigt ein Beispiel für eine Vorrichtung 1 zur Funktionsüberwachung eines elektrolytischen Gassensors 2 mit drei Elektroden 21, 22, 23 gemäss der Erfindung. Im vorliegenden Beispiel ist der zu überwachende Gassensor 2 bereits an die Vorrichtung 1 angeschlossen. Der Gassensor 2 ist dabei selbst nicht Teil der Vorrichtung 1.

Der zu überwachende, auf ein spezifisches Gas empfindliche elektrolytische Gassensor 2 weist eine Arbeits-, Referenz- und Gegenelektrode 21, 22, 23 auf. Der Gassensor 2 kann z.B. auf Kohlenmonoxid, Methan, Wasserstoff, Ammoniak, Wasserstoffsulfid, Stickstoffdioxid usw. empfindlich sein. Die Vorrichtung 1 weist weiterhin einen aus der elektrolytischen Gasanalyse bekannten Potentiostaten 3 auf, der zur Verstärkung einer zwischen der Referenz- und Arbeitselektrode 22, 21 anliegenden Differenzspannung dU sowie zur Regelung des Potentials der Gegenelektrode 23 vorgesehen ist, so dass die Differenzspannung dU möglichst klein wird. Der Potentiostat 3 umfasst einen Operationsverstärker 31, dessen Ausgang über einen Kondensator 33 mit dessen invertierenden Eingang verbunden ist. Der invertierende Eingang ist zudem über einen Widerstand 32 an der Referenzelektrode 22 angeschlossen. Ausgangsseitig stellt sich dann ein in die Gegenelektrode 23 hineinfliessender Messstrom i_{GAS} ein, der in etwa proportional zu einer Gaskonzentration GAS des zu detektierenden Gases ist. Prinzipiell ist dieser Messstrom i_{GAS} über eine Strommesseinrichtung erfassbar. Der Stromwertebereich liegt dabei typischerweise im Mikro- und Nanoampere-Bereich und ist folglich messtechnisch schwierig zu erfassen.

Im Beispiel der vorliegenden Figur 1 weist die Vorrichtung 1 zur vereinfachten und zugleich verbesserten Erfassung des Messstroms i_{GAS} bereits einen Transimpedanzverstärker 4 zur Umwandlung des Messstroms i_{GAS} in eine dazu proportionale Messspannung U_{GAS} auf. Die Messspannung U_{GAS} repräsentiert hierbei die Gaskonzentration GAS des zu detektierenden Gases. Der an sich bekannte Transimpedanzverstärker 4 weist zur Impedanzumwandlung und Messsignalverstärkung eine Reihe von elektrischen Komponenten, wie z.B. zwei Widerstände 42, 43 sowie einen Kondensator 44, zur geeigneten Beschaltung eines weiteren Operationsverstärkers 41 für die technische Realisierung der Transimpedanzverstärkung auf. Es wird dabei die an dem Widerstand 42 abfallende, zum hindurchfliessenden Messstrom i_{GAS} proportionale Spannung verstärkt. Das eigentliche verstärkte Messsignal liegt dann als Messspannung U_{GAS} am Ausgang des Operationsverstärkers 41 an. Mit dem Bezugszeichen 45 ist ferner eine Referenzspannungsquelle zum Einstellen einer Offsetspannung U_{OFF} bezeichnet, um einen optimalen Arbeitspunkt für den Betrieb des elektrolytischen Gassensors 2 zu ermöglichen.

Weiterhin weist die Vorrichtung 1 eine elektronische Verarbeitungseinheit 5 mit einer analogen Messerfassungseinheit 51 auf. Letztere ist zur Erfassung des in die Gegenelektrode 23 hineinfliessenden Messstroms i_{GAS} bzw. zur Erfassung der bereits mittels des Transimpendanzverstärkers 4 umgesetzten Messspannung U_{GAS} eingerichtet. Erfindungsgemäss ist die Verarbeitungseinheit 5 bzw. die analoge Messerfassungseinheit 51 dazu eingerichtet, unabhängig von der Ermittlung der Gaskonzentration GAS eine jeweils an den drei Elektroden 21-23 anliegende Arbeits-, Gegen- und Referenzspannung U_{A}, U_{G}, U_{R} zu erfassen und jeweils auf eine unzulässige Abweichung ΔU_{A}, ΔU_{G}, ΔU_{R} hin zu überwachen. Prinzipiell weisen die Messspannung U_{GAS} sowie die Arbeits-, Gegen- und Referenzspannung U_{A}, U_{G}, U_{R} ein gemeinsames Bezugspotential GND auf. Mit anderen Worten sind die zuvor genannten Spannungen U_{GAS}, U_{A}, U_{G}, U_{R} allesamt auf ein gemeinsames Potential, typischerweise auf die gemeinsame Masse, d.h. dem Massepotential bezogen.

Die analoge Messerfassungseinheit 51 kann aus mehreren Fensterkomparatoren für die Detektion der jeweiligen unzulässigen Abweichung ΔU_{A}, ΔU_{G}, ΔU_{R} und ggf. durch ein oder mehrere nachgeschaltete Logikgatter für die Ausgabe eines digitalen Signals für eine entsprechende zugeordnete Fehlermeldung F realisiert sein. Sie kann zudem dazu eingerichtet sein, auch die Messspannung U_{GAS} auf eine unzulässige Spannungsabweichung ΔU_{GAs} hin zu überwachen und in einem unzulässigen Fall eine zugeordnete zweite Fehlermeldung FGAS auszugeben.

Mit A1 bis A4 sind die jeweiligen Messeingänge bezeichnet. Es kann z.B. jeweils ein Fensterkomparator für die Diskriminierung der Messspannung U_{GAS} sowie der Elektrodenspannungen U_{A}, U_{G}, U_{R} vorgesehen sein. Ein Fensterkomparator kann z.B. durch zwei als Komparatoren beschaltete Operationsverstärker mit entsprechender Widerstandsbeschaltung realisiert sein.

Die Verarbeitungseinheit 5 bzw. die analoge Messerfassungseinheit 51 kann zudem dazu eingerichtet sein, eine Warn- oder Alarmmeldung WARN, AL auszugeben, wenn die die Gaskonzentration GAS repräsentierende Messspannung U_{GAS} einen vorgegebenen Schwellwert oder einen von der Gaskonzentration GAS zeitabhängigen Schwellwert überschreitet. Auch in diesem Fall dann die analoge Messerfassungseinheit 51 einen oder mehrere Fensterkomparatoren sowie analoge Zeitglieder und ggf. ein oder mehrere nachgeschaltete Logikgatter für die digitale Ausgabe der Warn- oder Alarmmeldung WARN, AL aufweisen.

Ferner kann die Verarbeitungseinheit 5 bzw. die analoge Messerfassungseinheit 51 dazu eingerichtet sein, zumindest eine Kombination aus der Mess-, Arbeits-, Gegen- und Referenzspannung U_{GAS}, U_{A}, U_{G}, U_{R} jeweils auf eine weitere unzulässige Abweichung hin zu überwachen und dann in einem unzulässigen Fall eine zugeordnete dritte Fehlermeldung auszugeben. Eine mögliche Kombination kann z.B. die Differenz oder die Summe aus jeweils zwei der zuvor genannten Spannungen U_{GAS}, U_{A}, U_{G}, U_{R} sein. Die technische Realisierung kann mit Hilfe von Fensterkomparatoren sowie mit analogen Addierern und Subtrahierern und ggf. weiterer nachgeschalteter Logikgattern erfolgen.

Schliesslich kann die gezeigte Vorrichtung 1 einen Tiefpass-Rauschfilter 46 zur Filterung der Messspannung U_{GAS} aufweisen. Vorzugsweise liegt die Eckfrequenz des Rauschfilters 46 in einem Bereich von 0.1 bis 10 Hertz. Das gezeigte Tiefpass-Rauschfilter 46 ist z.B. als RC-Filter erster Ordnung realisiert.

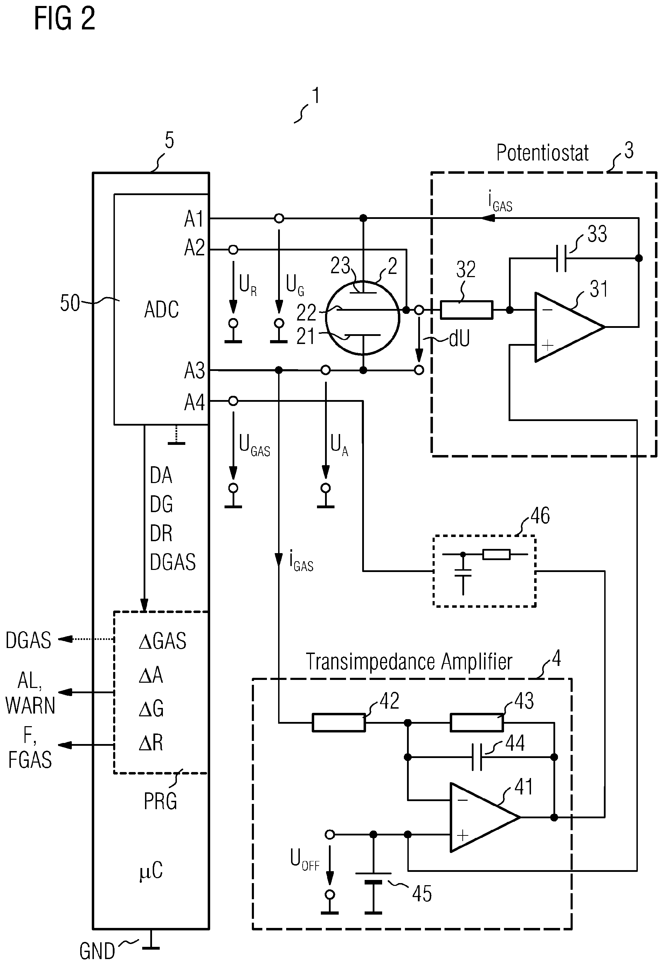

FIG 2 zeigt eine Ausführungsform der Vorrichtung 1 nach FIG 1 gemäss der Erfindung. Die Vorrichtung 1 gemäss FIG 2 unterscheidet sich von der Vorrichtung 1 gemäss FIG 1 dadurch, dass die Verarbeitungseinheit 5 einen A/D-Umsetzer 50 zur Umsetzung der Messspannung U_{GAS} sowie der Arbeits-, Gegen- und Referenzspannung U_{A}, U_{G}, U_{R} in entsprechende Digitalwerte DGAS, DA, DG, DR aufweist. Die Verarbeitungseinheit 5 ist vorzugsweise ein Mikrocontroller, der bereits einen integrierten A/D-Umsetzer 50 aufweist. Im vorliegenden Beispiel weist der gezeigte A/D-Umsetzer 50 vier analoge Messkanäle A1 bis A4 auf. Weiterhin ist der Mikrocontroller 5 dazu eingerichtet, die vom A/D-Umsetzer 50 bereitgestellten Digitalwerte DGAS, DA, DG, DR jeweils auf einen der unzulässigen Abweichung ΔU_{GAS}, ΔU_{A}, ΔU_{G}, ΔU_{R} entsprechenden Digitalwert DGAS, DA, DG, DR hin zu überwachen und in einem unzulässigen Fall die jeweilige zugeordnete Fehlermeldung F, FGAS auszugeben. Erreicht wird dies vorzugsweise durch ein geeignetes Computerprogramm PRG, welches in einem Speicher des Mikrocontrollers 5 gespeichert ist oder von diesem extern geladen wird, und welches dann vom Mikrocontroller ausgeführt wird.

Darüber hinaus kann der Mikrocontroller 5 dazu eingerichtet sein bzw. ein geeignetes (weiteres) Computerprogramm PRG aufweisen, um eine Warn- oder Alarmmeldung WARN, AL auszugeben, wenn eine jeweilige ermittelte Gaskonzentration GAS einen vorgegebenen Schwellwert oder einen von der jeweiligen Gaskonzentration GAS zeitabhängigen Schwellwert überschreitet. Es können z.B. mit steigender Gaskonzentration GAS vor der Ausgabe der Alarmmeldung AL auch eine oder mehrere Vorwarnmeldungen WARN ausgegeben werden. Schliesslich kann der Mikrocontroller 5 dazu eingerichtet sein, eine Fehlermeldung F, FGAS auszugeben, falls die Funktionsunfähigkeit des jeweiligen zu überwachenden Gassensors 2 festgestellt worden ist.

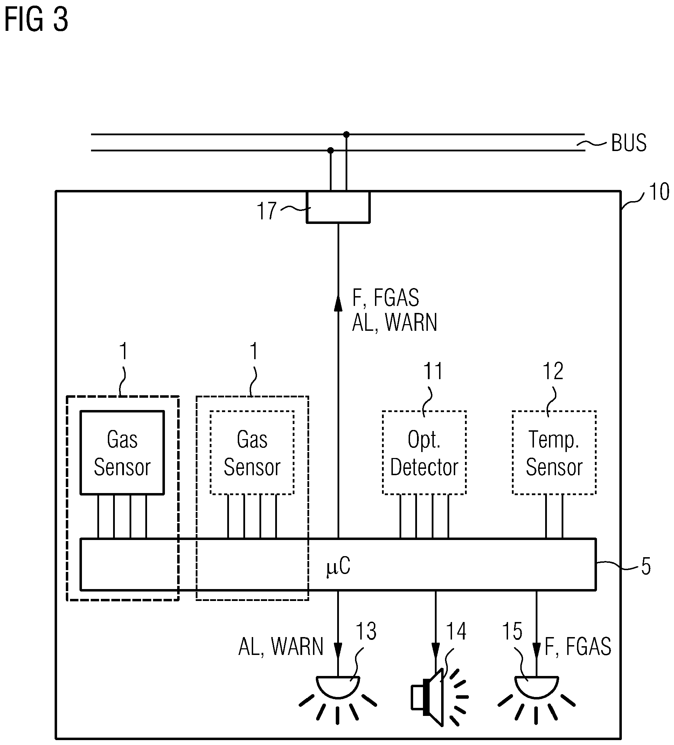

FIG 3 zeigt einen beispielhaften Gefahrenmelder 10 mit zwei Gassensoren 2, einem optischen Detektor 11, einem Temperatursensor 12 und je einer Vorrichtung 1 zur Funktionsüberwachung der Gassensoren 2 gemäss der Erfindung.

Der gezeigte Gefahrenmelder 10 kann auch als Multikriterienmelder bezeichnet werden, bei dem für die Detektion einer Gefahr, wie z.B. eines Brandes, mehrere messtechnisch erfasste Eingangsgrössen miteinander kombiniert werden, um die Zuverlässigkeit einer Gefahrendetektion zu erhöhen und um Fehlalarme zu minimieren.

Der Gefahrenmelder 10 weist eine Busschnittstelle 17 zur möglichen Ausgabe der ermittelten Fehler bzw. Fehlermeldungen F, FGAS sowie der Warn- und Alarmmeldungen WARN, AL auf einen angeschlossenen Melderbus BUS auf. Der Melderbus BUS ist typischerweise mit einer nicht gezeigten Gefahrenmeldezentrale zur Verarbeitung der eingehenden Meldungen F, FGAS, AL, WARN und zur Einleitung entsprechender Gegenmassnahmen angeschlossen. Die Gegenmassnahmen können z.B. die Weiterleitung eines gemeldeten Gasalarms an die Feuerwehr oder die Aufforderung eines Tausches des funktionsunfähig gemeldeten Gefahrenmelders an das Servicepersonal sein.

Alternativ oder zusätzlich kann die Ausgabe der zuvor genannten Warn- und Alarmmeldungen WARN, AL an eine optische Ausgabeeinheit 13, wie z.B. an eine Blitzleuchte, und/oder an eine akustische Ausgabeeinheit 14, wie z.B. an einen Sounder oder Buzzer, erfolgen. Im vorliegenden Beispiel weist der Gefahrenmelder 10 eine weitere optische Ausgabeeinheit 15, wie z.B. eine LED, zur Ausgabe der Fehlermeldung F, FGAS an. Eine z.B. rot blinkende LED 15 kann dann eine im Umfeld des Gefahrenmelders anwesende Person auf eine festgestellte Funktionsunfähigkeit des Gefahrenmelders 10 informieren.

Im vorliegenden Beispiel ist der gezeigte Mikrocontroller 5 dazu eingerichtet, zwei erfindungsgemässe Vorrichtungen 1 zur Funktionsüberwachung des jeweiligen Gassensors sowie einen optischen Detektor 11 für die Rauchdetektion sowie einen Temperaturdetektor 12 für die Übertemperaturdetektion gleichzeitig zu steuern und zu kontrollieren.

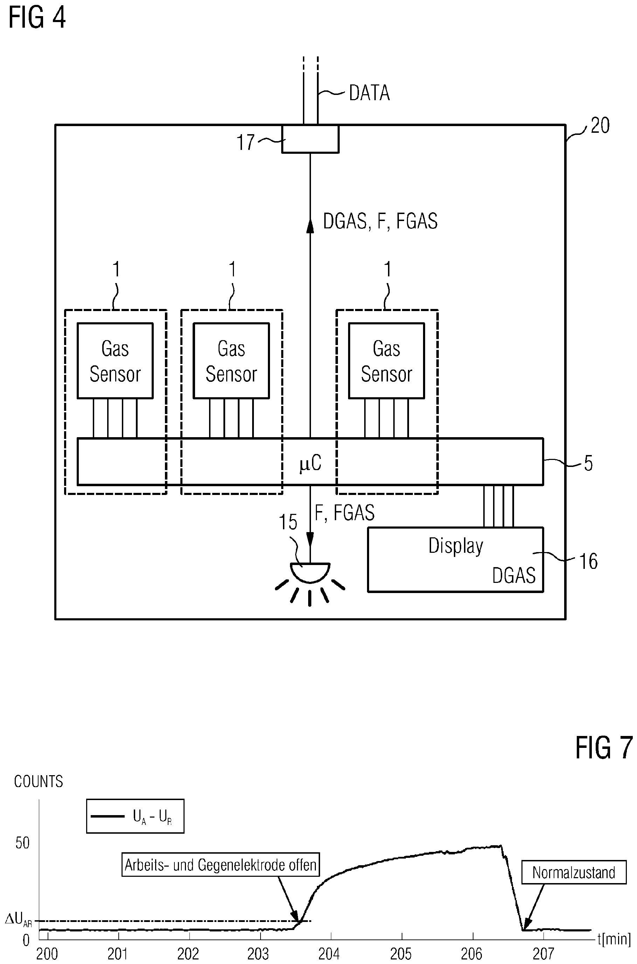

FIG 4 zeigt ein beispielhaftes Gasmessgerät 20 mit drei Gassensoren 2 und mit je einer Vorrichtung 1 zur Funktionsüberwachung der Gassensoren 2 gemäss der Erfindung.

Der gezeigte Gasmelder 20 weist eine Busschnittstelle 17 zur Ausgabe der ermittelten digitalen Gaskonzentrationswerte DGAS sowie zur Ausgabe etwaiger Fehler bzw. Fehlermeldungen F, FGAS an einen angeschlossenen Datenbus DATA auf. An letzterem können weitere Gasmelder 20 oder z.B. ein Messauswerte-PC oder eine Prozesssteuergerät angeschlossen sein.

Alternativ oder zusätzlich kann die Ausgabe der ermittelten digitalen Gaskonzentrationswerte DGAS auf einem Display 16 erfolgen, wie z.B. auf einem LCD. Es kann weiterhin alternativ oder zusätzlich die Ausgabe der Fehler bzw. Fehlermeldungen F, FGAS an eine optische Ausgabeeinheit 15 und/oder auf das Display 16 erfolgen. Im letzteren Fall können auch konkrete Angaben zu dem ermittelten Fehler F, FGAS ausgeben werden, wie z.B. "Ausfall Gassensors 2: Masseschluss detektiert!"

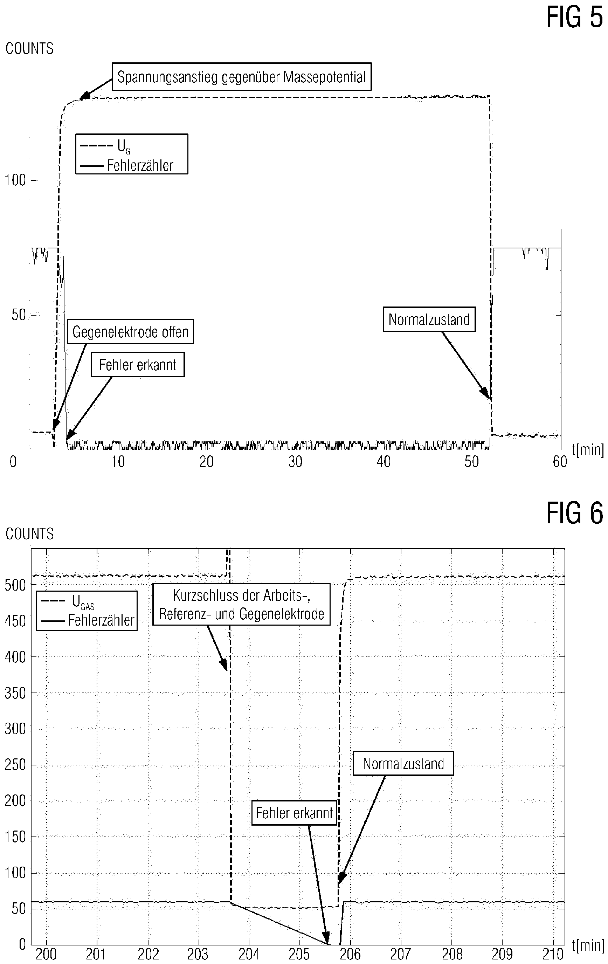

FIG 5 zeigt den Funktionsausfall bei einer fehlerhaft offenen Gegenelektrode eines elektrolytischen Gassensors und dessen Detektion durch das erfindungsgemässe Verfahren.

Im gezeigten Zeitdiagramm sind über der Ordinate sogenannte "Counts" aufgetragen. Diese entsprechen dem jeweiligen Digitalwert der mittels eines ADCs umgesetzten analogen, gestrichelt eingetragenen Gegenspannung U_{G}. Über der Abszisse ist die Zeit in Minuteneinheiten aufgetragen. Durchgezogen eingetragen ist zur Information der zeitliche Verlauf des Zählerstandes eines Fehlerzählers. Dieser wird für jeden auftretenden Fehler um einen Zählerwert verringert. Bei einem Zählerstand von 0 erfolgt die Ausgabe eines Fehlers. Durch das einstellbare "Herunterzählen" wird erreicht, dass kurzzeitig auftretende Fehler in der Messkette nicht zu einer sofortigen Fehlerauslösung beitragen, sondern erst eine gewisse vorgegebene Anzahl von Fehlerereignissen erreicht sein muss.

Im normalen fehlerfreien Betriebsmodus wird eine zwischen der Referenz- und Arbeitselektrode anliegende Differenzspannung verstärkt und darauf basierend das Potential der Gegenelektrode derart geregelt, dass diese Differenzspannung möglichst klein wird. Daraufhin stellt sich ein in etwa proportional zu einer Gaskonzentration des zu detektierenden Gases in die Gegenelektrode hineinfliessender Messstrom ein, welcher die Gaskonzentration repräsentiert. Gemäss der Erfindung wird nun unabhängig von der Ermittlung des Messstroms bzw. einer dazu proportionalen Messspannung eine jeweils an den drei Elektroden anliegende Arbeits-, Gegen- und Referenzspannung erfasst und jeweils auf eine unzulässige Abweichung hin überwacht.

Im vorliegenden Fall wird die Gegenspannung U_{G} auf eine unzulässige Abweichung gegenüber dem Massepotential erfasst, wobei die Gegenspannung U_{G} im normalen fehlerfreien Betriebsmodus in etwa auf dem U_{off}-Potential liegt. Die unzulässige Abweichung zeigt sich im Beispiel der vorliegenden Figur in einem sprunghaften Anstieg der Gegenspannung U_{G}. Dieser Fehler tritt typischerweise dann in Erscheinung, wenn die elektrische Verbindung zwischen der Gegenelektrode und dem Massepotential unterbrochen, d.h. offen ist. Dieser unzulässige Fall wird dann als zugeordnete Fehlermeldung ausgegeben. Das rechte Ende der Figur 5 zeigt wiederum die ordnungsgemässe Funktion des Gassensors.

FIG 6 zeigt den zeitlichen Verlauf eines Funktionsausfalls bei fehlerhaftem Kurzschluss der Arbeits-, Referenz- und Gegenelektrode miteinander (kein Masseschluss) und dessen Detektion durch das erfindungsgemässe Verfahren. In diesem Fall bricht die einer aktuellen Gaskonzentration entsprechende Messspannung U_{GAS} sprungartig ein. Ein derartiges Signalverhalten ist jedoch weder plausibel gegenüber einer maximal von dem Sensor ausgebbaren Signaländerung noch überhaupt physikalisch erklärbar. Diese unzulässige Änderung der Messspannung U_{G} wird dann als zweite Fehlermeldung ausgegeben. Im vorliegenden Beispiel ist das dann der Fall, wenn der Fehlerzähler wieder auf den Wert 0 heruntergezählt hat.

FIG 7 zeigt beispielhaft einen Funktionsausfall eines elektrolytischen Gassensors bei unzulässiger Abweichung der Spannungsdifferenz von Arbeitsspannung und Referenzspannung als zumindest eine Kombination aus der Mess-, Arbeits-, Gegen- und Referenzspannung. Es wird in diesem Fall eine zugeordnete dritte Fehlermeldung ausgegeben.

Im Folgenden werden weitere eindeutig detektierbare Fehlerfälle beschrieben:

### - Unterbruch der Gegenelektrode:

Die Gegenspannung U_{G} ändert sich sprunghaft zu extremen Spannungswerten mit einer nicht erklärbaren Geschwindigkeit der Sensor-Antwortzeit.

### - Unterbruch der Referenzelektrode, der Gegen- und Referenzelektroden, der Gegen- und Arbeitselektroden, der Arbeits- und Referenzelektroden oder der Arbeits-, Referenz- und Gegenelektroden:

Die Spannungsdifferenzen aus Gegen- und Referenzspannung U_{G}-U_{R} sowie aus Arbeits- und Referenzspannung U_{A}-U_{R} driften ausserhalb definierter Grenzwerte, die im ordnungsgemässen Betrieb nicht verlassen werden.

### - Unterbruch der Arbeitselektrode:

Die Messspannung U_{GAS} gleicht sich der Offsetspannung U_{OFF} an. Die der Offsetspannung U_{OFF} entsprechenden Digitalwerte können z.B. zur Überwachung im Mikrocontroller hinterlegt sein.

### - Kurzschluss der Arbeits- und Referenzelektroden miteinander, der Arbeits- und Gegenelektroden miteinander sowie aller Elektroden miteinander (kein Masseschluss):

Die Messspannung U_{GAS} sinkt zu extremen Spannungswerten unter die Offsetspannung U_{OFF}, was im ordnungsgemässen Betrieb nicht möglich ist.

### - Kurzschluss der Gegen- und Referenzelektroden miteinander (kein Masseschluss):

Die Messspannung U_{GAS} springt kurzzeitig zu extremen, nicht plausiblen Werten mit anschliessender Erholung.

### - Kurzschluss einzelner, zweier oder aller Elektroden mit Massepotential (Masseschluss)

Dies führt zu unzulässig hohem Stromverbrauch des Gassensors, so dass sich der Gefahrenmelder bzw. das Gasmessgerät abmeldet. Der Gassensor kann in diesem Fall nicht mehr mit ausreichend Strom für einen ordnungsgemässen Messbetrieb versorgt werden. Es kann alternativ oder zusätzlich eine weitere, vierte Fehlermeldung ausgegeben werden.

### Bezugszeichenliste

- 1: Vorrichtung zur Funktionsüberwachung
- 2: Gassensor, elektrolytischer Gassensor
- 3: Potentiostat
- 4: Transimpedanzverstärker
- 5: elektronische Verarbeitungseinheit, Mikrocontroller
- 10: Gefahrenmelder, Gasmelder, Rauchgasmelder, Brandmelder
- 11: optische Detektionseinheit
- 12: Temperaturdetektionseinheit
- 13: optische Ausgabeeinheit, Blitzleuchte
- 14: akustische Ausgabeeinheit, Sounder, Sirene
- 15: optische Ausgabeeinheit, LED
- 16: Display, Anzeigeeinheit
- 17: Schnittstelle, Busschnittstelle
- 20: Gasmessgerät
- 21: Arbeitselektrode
- 22: Referenzelektrode
- 23: Gegenelektrode
- 31, 41: Operationsverstärker
- 32, 42, 43: ohmscher Widerstand
- 33, 44: Kondensator, Kapazität
- 45: Referenzspannungsquelle
- 46: Tiefpassfilter, Rauschfilter
- 50: ADC, Analog-/Digital-Umsetzer
- 51: analoge Messerfassungseinheit

- A1-A4: analoge Eingänge
- AL: Alarmsignal, Alarmmeldung
- BUS: Melderlinie, Melderbus, Melderschleife
- COUNTS: Fehlerzähler
- dU: Differenzspannung
- DA, DG, DATA: Digitalwerte der Elektrodenspannungen Datenkabel, Buskabel
- DR DGAS: Digitalwert der Messspannung
- ΔU_{A}, ΔU_{R}, Δ U_{G}, ΔU_{GAS}, ΔU_{AR}: Abweichung
- ΔA, ΔG,: Digitalwert der Abweichung
- ΔR, ΔGAS: Digitalwert der Abweichungen
- F, FGAS: Fehlersignal, Fehlermeldung
- GAS: Gaskonzentration
- GND: Bezugspotential, Masse, Massepotential
- i_{GAS}: Messstrom
- PRG: Programm, Computerprogramm
- t: Zeit
- U_{A}: Arbeitsspannung
- U_{R}: Referenzspannung
- U_{G}: Gegenspannung
- U_{GAS}: Messspannung
- U_{OFF}: Offsetspannung
- WARN: Warnsignal, Warnmeldung

## Patentansprüche

1. Verfahren zur Funktionsüberwachung eines elektrolytischen, auf ein spezifisches Gas empfindlichen Gassensors (2), wobei der Gassensor (2) eine Arbeits-, Referenz- und Gegenelektrode (21-23) aufweist, wobei eine zwischen der Referenz- und Arbeitselektrode (22, 21) anliegende Differenzspannung (dU) verstärkt wird und darauf basierend das Potential der Gegenelektrode (23) derart geregelt wird, dass die Differenzspannung (dU) möglichst klein wird, worauf sich dann ein in etwa proportional zu einer Gaskonzentration (GAS) des zu detektierenden Gases in die Gegenelektrode (23) hineinfliessender Messstrom (i_{GAs}) einstellt, wobei unabhängig von der Ermittlung des Messstroms (i_{GAS}), welcher die Gaskonzentration (GAS) repräsentiert, eine jeweils an den drei Elektroden (21-23) anliegende Arbeits-, Gegen- und Referenzspannung (U_{A}, U_{G}, U_{R}) erfasst und jeweils auf eine unzulässige Abweichung (AU_{A},AU_{G}, ΔU_{R}) hin überwacht wird, und wobei dann in einem unzulässigen Fall eine zugeordnete Fehlermeldung (F) ausgegeben wird.

2. Verfahren nach Anspruch 1, wobei der Messstrom (i_{GAs}) zuerst in eine dazu proportionale Messspannung (U_{GAS}) umgewandelt wird, wobei dann diese Messspannung (U_{GAS}) die dazu in etwa proportionale Gaskonzentration (GAS) repräsentiert.

3. Verfahren nach Anspruch 2, wobei eine Warn- oder Alarmmeldung (WARN, AL) ausgegeben wird, wenn die die Gaskonzentration (GAS) repräsentierende Messspannung (U_{GAS}) einen vorgegebenen Schwellwert oder einen von der Gaskonzentration (GAS) zeitabhängigen Schwellwert über- oder unterschreitet.

4. Verfahren nach Anspruch 2 oder 3, wobei die Messspannung (U_{GAS}) auf eine unzulässige Spannungsabweichung (ΔU_{GAS}) hin überwacht wird und wobei dann in einem unzulässigen Fall eine zugeordnete zweite Fehlermeldung (FGAS) ausgegeben wird.

5. Verfahren nach einem der Ansprüche 2 bis 4, wobei zumindest eine Kombination aus der Mess-, Arbeits-, Gegen- und Referenzspannung (U_{GAS}, U_{A}, U_{G}, U_{R}) jeweils auf eine weitere unzulässige Abweichung hin überwacht wird und wobei dann in einem unzulässigen Fall eine zugeordnete dritte Fehlermeldung ausgegeben wird.

6. Vorrichtung zur Funktionsüberwachung eines elektrolytschen, auf ein spezifisches Gas empfindlichen Gassensors (2) mit einer Arbeits-, Referenz- und Gegenelektrode (21-23), wobei die Vorrichtung aufweist
- den an die Vorrichtung angeschlossenen Gassensor (2),
- einen Potentiostaten (3) zur Verstärkung einer zwischen der Referenz- und Arbeitselektrode (22, 21) anliegenden Differenzspannung (dÜ) sowie zur Regelung des Potentials der Gegenelektrode (23), so dass die Differenzspannung (dU) möglichst klein wird, und
- eine elektronische Verarbeitungseinheit (5) zur Erfassung eines in die Gegenelektrode (23) hineinfliessenden, sich in etwa proportional zu einer Gaskonzentration (GAS) des zu detektierenden Gases einstellenden Messstroms (i_{GAS}), wobei die elektronische Verarbeitungseinheit (5) zusätzlich dazu eingerichtet ist, unabhängig von der Ermittlung der Gaskonzentration (GAS) eine jeweils an den drei Elektroden (21-23) anliegende Arbeits-, Gegen- und Referenzspannung (U_{A}, U_{G}, U_{R}) zu erfassen, jeweils auf eine unzulässige Abweichung (ΔU_{A}, ΔU_{G}, ΔU_{R}) hin zu überwachen und in einem unzulässigen Fall eine zugeordnete Fehlermeldung (F) auszugegen.

7. Vorrichtung nach Anspruch 6, mit einem Transimpedanzverstärker (4) zur Umwandlung des Messstroms (i_{GAS}) in eine dazu proportionale Messspannung (U_{GAS}) und mit der elektronischen Verarbeitungseinheit (5) zur Erfassung der dann die Gaskonzentration (GAS) repräsentierenden Messspannung (U_{GAS}).

8. Vorrichtung nach Anspruch 7, wobei die elektronische Verarbeitungseinheit (5) eingerichtet ist, die Messspannung (U_{GAS}) auf eine unzulässige Spannungsabweichung (AU_{GAS}) hin zu überwachen und in einem unzulässigen Fall eine zugeordnete zweite Fehlermeldung (FGAS) auszugeben.

9. Vorrichtung nach Anspruch 7 oder 8, wobei die Messspannung (U_{GAS}) sowie die Arbeits-, Gegen- und Referenzspannung (U_{A}, U_{G}, U_{R}) ein gemeinsames Bezugspotential (GND) aufweisen.

10. Vorrichtung nach einem der Ansprüche 7 bis 9, wobei die Verarbeitungseinheit (5) einen A/D-Umsetzer (50) zur Umsetzung der Messspannung (U_{GAS}) sowie der Arbeits-, Gegen- und Referenzspannung (U_{A}, U_{G}, U_{R}) in entsprechende Digitalwerte (DGAS, DA, DG, DR) aufweist oder mit einem A/D-Umsetzer (50) datentechnisch verbunden ist, und wobei die Verarbeitungseinheit (5) dazu eingerichtet ist, die Digitalwerte (DGAS, DA, DG, DR) jeweils auf einen der unzulässigen Abweichung (ΔU_{GAS}, ΔU_{A}, ΔU_{G}, ΔU_{R}) entsprechenden Digitalwert (DGAS, DA, DG, DR) hin zu überwachen und in einem unzulässigen Fall die jeweilige zugeordnete Fehlermeldung (F, FGAS) auszugeben.

11. Vorrichtung nach Anspruch 10, wobei die Verarbeitungseinheit (5) eingerichtet ist, zumindest eine Kombination aus je zwei der Mess-, Arbeits-, Gegen- und Referenzspannung (U_{GAS}, U_{A}, U_{G}, U_{R}) entsprechenden Digitalwerten (DGAS, DA, DG, DR) jeweils auf eine weitere unzulässige Abweichung hin zu überwachen und in einem unzulässigen Fall eine zugeordnete dritte Fehlermeldung auszugeben.

12. Vorrichtung nach Anspruch 10 oder 11, wobei die Messspannung (U_{GAS}) sowie die Arbeits-, Gegen- und Referenzspannung (U_{A}, U_{G}, U_{R}) mittels des A/D-Umsetzers (50) zumindest in etwa zeitgleich mit einer Abtastrate in einem Bereich von 0.25 bis 4 Hertz in die entsprechenden Digitalwerte (DGAS, DA, DG, DR) umsetzbar sind.

13. Vorrichtung einem der Ansprüche 7 bis 12, mit einem dem A/D-Umsetzer (50) vorgeschalteten Tiefpass-Rauschfilter (46) zur Filterung der Messspannung (U_{GAS}) mit einer Eckfrequenz von weniger als 10 Hertz, insbesondere von weniger als 1 Hertz.

14. Gefahrenmelder mit zumindest einem elektrolytischen, jeweils auf ein spezifisches Gas empfindlichen Gassensor (2) und mit einer Vorrichtung (1) nach einem der Ansprüche 6 bis 13 zur Funktionsüberwachung des jeweiligen Gassensors (2), wobei der Gefahrenmelder eine erste Ausgabeeinheit (13, 14) zur Ausgabe einer Warn- oder Alarmmeldung (WARN, AL) aufweist, wenn eine jeweilige ermittelte Gaskonzentration (GAS) einen vorgegebenen Schwellwert oder einen von der jeweiligen Gaskonzentration (GAS) zeitabhängigen Schwellwert über- oder unterschreitet, und wobei der Gefahrenmelder eine zweite Ausgabeeinheit (15-17) zur Ausgabe einer Fehlermeldung (F, FGAS) im Falle einer ermittelten Funktionsunfähigkeit des jeweiligen Gassensors (2) aufweist.

15. Gasmessgerät mit zumindest einem elektrolytischen, jeweils auf ein spezifisches Gas empfindlichen Gassensor (2) und mit einer Vorrichtung (1) nach einem der Ansprüche 6 bis 13 zur Funktionsüberwachung des jeweiligen Gassensors (2), wobei das Gasmessgerät eine Messausgabeeinheit (16, 17) zur Ausgabe einer jeweiligen Gaskonzentration (GAS) und eine zweite Ausgabeeinheit (15-17) zur Ausgabe einer Fehlermeldung (F, FGAS) im Falle einer ermittelten Funktionsunfähigkeit des jeweiligen Gassensors (2) aufweist.

## Claims

1. Method for the functional monitoring of an electrolytic gas sensor (2) which is sensitive to a specific gas, wherein the gas sensor (2) has a working, reference and counter electrode (21-23), wherein a differential voltage (dU) present between the reference and working electrodes (22, 21) is amplified and on this basis the potential of the counter electrode (23) is regulated such that the differential voltage (dU) becomes as small as possible, whereupon a measured current (i_{GAS}) arises which flows into the counter electrode (23) and is approximately proportional to a gas concentration (GAS) of the gas to be detected, wherein independently of the determination of the measured current (i_{GAS}) which represents the gas concentration (GAS), a working, counter and reference voltage (U_{A}, U_{G}, U_{R}) which is present in each case at the three electrodes (21-23) is captured and in each case is monitored for an impermissible deviation (ΔU_{A}, ΔU_{G}, ΔU_{R}), and wherein then in an impermissible case an assigned error message (F) is output.

2. Method according to claim 1, wherein the measured current (igₐₛ) is first converted into a measured voltage (U_{GAS}) proportional thereto, wherein then this measured voltage (U_{GAS}) represents the gas concentration (GAS) approximately proportional thereto.

3. Method according to claim 2, wherein a warning or alarm message (WARN, AL) is output if the measured voltage (U_{GAS}) representing the gas concentration (GAS) exceeds or undershoots a predefined threshold value or a threshold value which is time-dependent on the gas concentration (GAS).

4. Method according to claim 2 or 3, wherein the measured voltage (U_{GAS}) can be monitored for an impermissible voltage deviation (ΔU_{GAS}) and wherein in an impermissible case an assigned second error message (FGAS) is output.

5. Method according to one of claims 2 to 4, wherein at least one combination of the measurement, working, counter and reference voltages (U_{GAS}, U_{A}, U_{G}, U_{R}) is monitored in each case for another impermissible deviation and wherein then in an impermissible case an assigned third error message is output.

6. Apparatus for the functional monitoring of an electrolytic gas sensor (2) which is sensitive to a specific gas and which has a working, reference and counter electrode (21-23), wherein the apparatus has
- the gas sensor (2) connected to the apparatus,
- a potentiostat (3) for amplifying a differential voltage (dU) present between the reference and working electrodes (22, 21) and for regulating the potential of the counter electrode (23) so that the differential voltage (dU) becomes as small as possible, and
- an electronic processing unit (5) for capturing a measured current (i_{GAs}) which flows into the counter electrode (23) and is approximately proportional to a gas concentration (GAS) of the gas to be detected, wherein the electronic processing unit (5) is additionally set up to capture a working, counter and reference voltage (U_{A}, U_{G}, U_{R}) which is present in each case at the three electrodes (21-23), independently of the determination of the gas concentration (GAS), in each case to monitor it for an impermissible deviation (ΔU_{A}, ΔU_{G}, ΔU_{R}) and in an impermissible case to output an assigned error message (F).

7. Apparatus according to claim 6, having a transimpedance amplifier (4) for converting the measured current (i_{GAs}) into a measured voltage (U_{GAS}) proportional thereto and having the electronic processing unit (5) for capturing the measured voltage (U_{GAS}) then representing the gas concentration (GAS).

8. Apparatus according to claim 7, wherein the electronic processing unit (5) is set up to monitor the measured voltage (U_{GAS}) for an impermissible voltage deviation (ΔU_{GAS}) and in an impermissible case to output an assigned second error message (FGAS).

9. Apparatus according to claim 7 or 8, wherein the measured voltage (U_{GAS}) and the working, counter and reference voltages (U_{A}, U_{G}, U_{R}) have a common reference potential (GND).

10. Apparatus according to one of claims 7 to 9, wherein the processing unit (5) has an A/D converter (50) for converting the measured voltage (U_{GAS}) and the working, counter and reference voltages (U_{A}, U_{G}, U_{R}) into corresponding digital values (DGAS, DA, DG, DR) or which is connected to an A/D converter (50) by way of a data communications link, and wherein the processing unit (5) is set up to monitor the digital values (DGAS, DA, DG, DR) in each case for a digital value (DGAS, DA, DG, DR) corresponding to the impermissible deviation (ΔU_{GAS}, ΔU_{A}, ΔU_{G}, ΔU_{R}) and in an impermissible case to output the respective assigned error message (F, FGAS).

11. Apparatus according to claim 10, wherein the processing unit (5) is set up to monitor at least one combination of digital values (DGAS, DA, DG, DR) corresponding to two of the measurement, working, counter and reference voltages (U_{GAS}, U_{A}, U_{G}, U_{R}) in each case for another impermissible deviation and in an impermissible case to output an assigned third error message.

12. Apparatus according to claim 10 or 11, wherein the measured voltage (U_{GAS}) and the working, counter and reference voltages (U_{A}, U_{G}, U_{R}) can be converted by means of the A/D converter (50) into the corresponding digital values (DGAS, DA, DG, DR) at least approximately simultaneously, with a scanning rate in a range between 0.25 and 4 Hertz.

13. Apparatus according to one of claims 7 to 12, having a low-pass smoke filter (46) upstream of the A/D converter (50) for filtering the measured voltage (U_{GAS}) with an edge frequency of less than 10 Hertz, in particular of less than 1 Hertz.

14. Hazard alarm having at least one electrolytic gas sensor (2) which is sensitive to a specific gas and having an apparatus (1) according to one of claims 6 to 13 for the functional monitoring of the respective gas sensor (2), wherein the hazard alarm has a first output unit (13, 14) for outputting a warning or alarm message (WARN, AL) if a respective determined gas concentration (GAS) exceeds or undershoots a predefined threshold value or a threshold value which is time-dependent on the respective gas concentration (GAS), and wherein the hazard alarm has a second output unit (15-17) for outputting an error message (F, FGAS) in the event of a malfunction of the respective gas sensor (2) being determined.

15. Gas measuring device having at least one electrolytic gas sensor (2) which is sensitive to a specific gas and having an apparatus (1) according to one of claims 6 to 13 for the functional monitoring of the respective gas sensor (2), wherein the gas measuring device has a measurement output unit (16, 17) for outputting a respective gas concentration (GAS) and a second output unit (15-17) for outputting an error message (F, FGAS) in the event of a malfunction of the respective gas sensor (2) being determined.

## Revendications

1. Procédé destiné à la surveillance du fonctionnement d'un capteur de gaz (2) électrolytique sensible à un gaz spécifique, dans lequel le capteur de gaz (2) présente une électrode de travail, une électrode de référence et une contre-électrode (21-23), dans lequel une tension différentielle (dU) présente entre l'électrode de référence et l'électrode de travail (22, 21) est renforcée et en se basant dessus le potentiel de la contre-électrode (23) est régulé de telle sorte que la tension différentielle (dU) devient la plus petite possible, ce sur quoi un courant de mesure (i_{GAS}) s'écoulant dans la contre-électrode (23) sensiblement proportionnellement à une concentration en gaz (GAS) du gaz à détecter s'ajuste ensuite, dans lequel indépendamment de la détermination du courant de mesure (i_{GAS}), lequel représente la concentration en gaz (GAS), une tension de travail, une contre-tension et une tension de référence (U_{A}, U_{G}, U_{R}) présentes respectivement au niveau des trois électrodes (21-23) sont détectées et respectivement un écart non autorisé (ΔU_{A}, ΔU_{G}, ΔU_{R}) est surveillé, et dans lequel ensuite dans un cas non autorisé un message d'erreur associé (F) est émis.

2. Procédé selon la revendication 1, dans lequel le courant de mesure (i_{GAs}) est en premier lieu transformé en une tension de mesure proportionnelle (U_{GAS}), dans lequel cette tension de mesure (U_{GAS}) représente ensuite la concentration en gaz (GAS) sensiblement proportionnelle à celle-ci.

3. Procédé selon la revendication 2, dans lequel un message d'avertissement ou d'alerte (WARN, AL) est émis lorsque la tension de mesure (U_{GAS}) représentant la concentration en gaz (GAS) dépasse par le haut ou par le bas une valeur seuil prédéfinie ou une valeur seuil dépendant de la concentration en gaz (GAS) dans le temps.

4. Procédé selon la revendication 2 ou 3, dans lequel la tension de mesure (U_{GAS}) est surveillée pour détecter un écart de tension non autorisé (ΔU_{Gas}) et dans lequel ensuite dans un cas non autorisé un deuxième message d'erreur associé (FGAS) est émis.

5. Procédé selon l'une des revendications 2 à 4, dans lequel au moins une combinaison de la tension de mesure, de la tension de travail, de la contre-tension et de la tension de référence (U_{GAS}, U_{A}, U_{G}, U_{R}) est respectivement surveillée pour détecter un autre écart non autorisé et dans lequel ensuite dans un cas non autorisé un troisième message d'erreur associé est émis.

6. Dispositif destiné à la surveillance du fonctionnement d'un capteur de gaz (2) électrolytique sensible à un gaz spécifique avec une électrode de travail, une électrode de référence et une contre-électrode (21-23), dans lequel le dispositif présente
- le capteur de gaz (2) relié au dispositif,
- un potentiostat (3) destiné à l'amplification d'une tension différentielle (dU) présente entre l'électrode de référence et l'électrode de travail (22, 21) ainsi qu'à la régulation du potentiel de la contre-électrode (23), de sorte que la tension différentielle (dU) devient la plus petite possible, et
- une unité de traitement électronique (5) destinée à la détection d'un courant de mesure (i_{GAs}) s'écoulant dans la contre-électrode (23) et s'ajustant sensiblement proportionnellement à une concentration en gaz (GAS) du gaz à détecter, dans lequel l'unité de traitement électronique (5) est en outre mise en place pour détecter indépendamment de la détermination de la concentration en gaz (GAS) une tension de travail, une contre-tension et une tension de référence (U_{A}, U_{G}, U_{R}) présentes respectivement au niveau des trois électrodes (21-23), pour surveiller respectivement un écart non autorisé (ΔU_{A}, ΔU_{G}, ΔU_{R}) et émettre un message d'erreur associé (F) dans un cas non autorisé.

7. Dispositif selon la revendication 6, avec un amplificateur de transimpédance (4) destiné à la transformation du courant de mesure (i_{GAs}) en une tension de mesure (U_{GAS}) proportionnelle à celui-ci et avec l'unité de traitement électronique (5) destinée à la détection de la tension de mesure (U_{GAS}) représentant ensuite la concentration en gaz (GAS).

8. Dispositif selon la revendication 7, dans lequel l'unité de traitement électronique (5) est mise en place pour surveiller la tension de mesure (U_{GAS}) pour détecter un écart de tension non autorisé (AU_{GAS}) et émettre dans un cas non autorisé un deuxième message d'erreur associé (FGAS).

9. Dispositif selon la revendication 7 ou 8, dans lequel la tension de mesure (U_{GAS}) ainsi que la tension de travail, la contre-tension et la tension de référence (U_{A}, U_{G}, U_{R}) présentent un potentiel de référence commun (GND).

10. Dispositif selon l'une des revendications 7 à 9, dans lequel l'unité de traitement (5) présente un convertisseur analogique-numérique (50) destiné à la transformation de la tension de mesure (U_{GAS}) ainsi que de la tension de travail, de la contre-tension et de la tension de référence (U_{A}, U_{G}, U_{R}) en valeurs numériques correspondantes (DGAS, DA, DG, DR) ou est reliée informatiquement à un convertisseur analogique-numérique (50), et dans lequel l'unité de traitement (5) est mise en place pour surveiller les valeurs numériques (DGAS, DA, DG, DR) respectivement pour détecter une valeur numérique (DGAS, DA, DG, DR) correspondant à l'écart non autorisé (U_{GAS}, ΔU_{A}, ΔU_{G}, ΔU_{R}) et émettre dans un cas non autorisé le message d'erreur associé (F, FGAS) respectif.

11. Dispositif selon la revendication 10, dans lequel l'unité de traitement (5) est mise en place pour surveiller au moins une combinaison de deux valeurs numériques (DGAS, DA, DG, DR) correspondant à la tension de mesure, la contre-tension et la tension de référence (U_{GAS}, U_{A}, U_{G}, U_{R}) respectivement pour détecter un autre écart non autorisé et émettre dans un cas non autorisé un troisième message d'erreur associé.

12. Dispositif selon la revendication 10 ou 11, dans lequel la tension de mesure (U_{GAS}) ainsi que la tension de travail, la contre-tension et la tension de référence (U_{A}, U_{G}, U_{R}) peuvent être converties au moyen du convertisseur analogique-numérique (50) au moins simultanément à une fréquence de balayage dans une plage de 0,25 à 4 hertz en valeurs numériques correspondantes (DGAS, DA, DG, DR).

13. Dispositif selon l'une des revendications 7 à 12, avec un filtre de bruit passe-haut (46) monté en amont du convertisseur analogique-numérique (50) destiné au filtrage de la tension de mesure (U_{GAS}) avec une fréquence de base inférieure à 10 hertz, en particulier inférieure à 1 hertz.

14. Avertisseur de danger avec au moins un capteur de gaz (2) électrolytique respectivement sensible à un gaz spécifique et avec un dispositif (1) selon l'une des revendications 6 à 13 destiné à la surveillance du fonctionnement du capteur de gaz (2) respectif, dans lequel l'avertisseur de danger présente une première unité d'émission (13, 14) destinée à l'émission d'un message d'avertissement ou d'alerte (WARN, AL) lorsqu'une concentration en gaz (GAS) déterminée respective dépasse par le haut ou par le bas une valeur seuil prédéfinie ou une valeur seuil dépendante de la concentration en gaz (GAS) respective dans le temps, et dans lequel l'avertisseur de danger présente une deuxième unité d'émission (15-17) destinée à l'émission d'un message d'erreur (F, FGAS) en cas d'incapacité à fonctionner déterminée du capteur de gaz (2) respectif.

15. Appareil de mesure de gaz avec au moins un capteur de gaz (2) électrolytique respectivement sensible à un gaz spécifique et avec un dispositif (1) selon l'une des revendications 6 à 13 destiné à la surveillance du fonctionnement du capteur de gaz (2) respectif, dans lequel l'appareil de mesure de gaz présente une unité d'émission de mesure (16, 17) destinée à l'émission d'une concentration en gaz (GAS) respective et une deuxième unité d'émission (15-17) destinée à l'émission d'un message d'erreur (F, FGAS) en cas d'incapacité à fonctionner déterminée du capteur de gaz (2) respectif.
